# EUROPÄISCHE PATENTANMELDUNG

(11) **EP 4 672 522 A1**
(43) Veröffentlichungstag der Anmeldung: **31.12.2025**
(21) Anmeldenummer: 25186027.6
(22) Anmeldetag: 27.06.2025
(51) Int. Cl.: H02B 7/06, H02B 13/025, E04H 5/04

(54) **FUNKTIONSGEBÄUDE FÜR STROMSCHALTANLAGEN**

(30) Priorität: 28.06.2024 DE 102024118463
(71) Anmelder: Holzbau Dawen GmbH, 54439 Saarburg (DE)
(72) Erfinder: Rieth, Holger, 54439 Saarburg (DE)
(74) Vertreter: Patentanwaltskanzlei Vièl & Wieske PartGmbB

(57) **Zusammenfassung**

Die Erfindung betrifft ein Funktionsgebäude für Stromschaltanlagen (1), wobei das Funktionsgebäude ein Fundament (9) und eine Umhausung mit Wänden (7) und einer Decke (8) aufweist, innerhalb welcher die Leitungsanschlüsse und die Stromschaltanlagen (1) angeordnet sind. Im Rahmen der Erfindung wird vorgeschlagen, dass ein vertikaler Druckentlastungskanal (5) über eine Druckentlastungsklappe (6) mit dem Äußeren des Funktionsgebäudes verbunden ist, wobei die Druckentlastungsklappe (6) bei Überschreiten eines bestimmten Drucks im Winkel von weniger als 90° zur Vertikalen öffnet.

## Beschreibung

Die vorliegende Erfindung betrifft ein Funktionsgebäude für Stromschaltanlagen, wobei das Funktionsgebäude ein Fundament und eine Umhausung mit Wänden und einer Decke aufweist, innerhalb welcher die Leitungsanschlüsse und die Stromschaltanlagen angeordnet sind.

Funktionsgebäude für Stromschaltanlagen werden im Bereich der Mittelspannung und der Niederspannung verwendet. Beispielsweise kann das Funktionsgebäude eine Hochspannungs-/Niederspannungs- oder eine Niederspannungs-/Hochspannungs-Station sein. Die Station kann dabei Transformatoren, insbesondere Transformatoren zur Umwandlung von Mittelspannung in Niederspannung oder von Niederspannung in Hochspannung aufweisen.

Stromschaltanlagen werden bei der Verteilung, Kontrolle und Sicherung elektrischer Energie verwendet. Innerhalb von Stromschaltanlagen wird mit Schaltern, Sicherungen und Leistungsschaltern der Stromfluss reguliert. Wegen der hohen Spannungen bzw. Ströme in den Stromschaltanlagen besteht das Risiko von Kurzschlüssen. Diese können insbesondere beim Zu- oder Abschalten von Stromkreisen entstehen. Dabei ist es möglich, dass Lichtbögen im Inneren der Stromschaltanlage gebildet werden. Diese Lichtbögen können eine Gasexplosion mit Druckwelle und starker Rauchentwicklung verursachen, die für Personen in dem Funktionsgebäude und außerhalb des Funktionsgebäudes eine große Gefahr darstellen. Die Zuleitungen können von unten in die Stromschaltanlagen geführt werden.

Bei gattungsgemäßen Funktionsgebäuden für Mittelspannungsanlagen wird ein Störlichtbogentest gemäß EN 62271:202 durchgeführt. Dabei wird in der Mittelspannungsanlage des Funktionsgebäudes ein Kurzschluss mit 24 kV und 20 kA für eine Sekunde erzeugt. Dies führt zu einem Lichtbogen und Plasmagasen mit Temperaturen von bis zu 20.000 Grad Celsius in der Anlage. Durch die entstehende Hitze und das Plasma entsteht Druck, der aus der Mittelspannungsanlage abgeleitet werden muss. Diese Prüfung dient dem Nachweis des Personenschutzes, um sicherzustellen, dass Personen außerhalb des Funktionsgebäudes sowie in dem Funktionsgebäude nicht gefährdet werden. Insbesondere sollte die Druckwelle möglichst derart abgeleitet werden, um die Belastung der Personen in dem Funktionsgebäude zu reduzieren und die Gefahr für Passanten von der Druckwelle oder fliegenden Teilen erfasst zu werden, zu vermeiden.

Entsprechende Funktionsgebäude sind bekannt.

Die Patentschrift AT 36227 B beschreibt eine Trafostation in Leichtbauweise aus Metall. Die Trafostation weist ein Metallprofilgerippe mit formsteifen Füllblechen, die durch Schweißung fest verbunden sind, auf.

Die Patentschrift DD 238 887 A1 offenbart eine elektrische Schaltanlage der Zellenbauweise in lichtbogengeschützter Ausführung. In der Schaltanlage sind abgeteilte, lichtbogengeschützte Räume zur Unterbringung von Betriebsmitteln vorgesehen. Die zur Bildung der abgeteilten Räume erforderlichen Trennwände sind aus Metallgitterelementen gebildet.

Die Patentschrift DE 23 01 149 C3 betrifft ein transportables Gehäuse für im Freien aufzustellende Transformatorstationen. Das transportable Gehäuse weist eine waagerechte Decke auf, die zusammen mit zwei senkrecht an sie anschließenden Wandteilen einstückig aus Beton hergestellt ist, wobei die freien Ecken der waagerechten Decken durch einen getrennt hergestellten Kantenpfosten verbunden sind. Einander gegenüberliegenden Flächen des Kantenpfostens und der waagerechten Decke sind durch eine mit einer elastischen Masse gefüllte Dehnungsfuge voneinander getrennt.

Die Auslegeschrift DE 21 41 499 B2 beschreibt ein belüftbares Gehäuse für Transformatoren. Wenigstens eine Wand ist zumindest teilweise aus im Abstand von- und parallel zueinander liegenden Leisten gebildet.

Die EP 2 923 015 B1 offenbart eine Übergabestation zur Einspeisung lokal bereitgestellter elektrischer Energie mit einer Umhausung. Die Umhausung weist einen ersten, begehbaren Raum und einen zweiten, mittels einer Abluftleitung mit der Außenwelt verbundenen Raum auf. Die Abluftleitung erstreckt sich von dem zweiten Raum aus durch eine Durchführungsöffnung in den ersten Raum hinein und durch den ersten Raum hindurch, und ist aus einer Seiten- oder Deckenwandung der Umhausung aus dem ersten Raum herausgeführt.

Aus der DE 100 09 013 A1 ist eine transportable Raumzelle in Form einer teilweise in Erdreich abgesenkten, einen Umspannraum für einen Transformator sowie Räume für Spannungsanlagen enthaltenden begehbaren Umspannstation, die an eine Bodenplatte angegossene Front- und Seitenwände und wenigstens eine auf diese aufgesetzte Dachplatte aufweist, wobei in zumindest einer der Wände eine Ausnehmung für eine Lüftertür oder dergleichen Verschließelement des Umspannraums vorgesehen ist.

Die DE 35 11 962 A1 beschreibt eine nicht begehbare Kleinstation, die sich für die Aufstellung an Verbraucherschwerpunkten eignet.

Die DE 10 2012 221 498 A1 betrifft eine Übergabestation zur Einspeisung elektrischer Energie sowie einen Windanlagenpark mit einer solchen Übergabestation.

Aus der DE 298 10 896 U1 ist eine elektrische Umspannstation bekannt.

Die DE 30 14 483 A1 beschreibt eine explosionsgefährdete elektrische Netzstation.

Nachteilig an den bekannten Trafostationen ist, dass diese zum großen Teil aus Metall oder Stahlbeton hergestellt sind. Dabei werden bei der Herstellung große Mengen an Energie verbraucht und erhebliche Mengen von CO₂ emittiert. Zudem weisen die bekannten Trafostationen ein hohes Gewicht auf und lassen sich nur aufwendig zu ihrem Aufstellort transportieren.

Die Aufgabe der vorliegenden Erfindung besteht darin, die bekannten Trafostationen zu verbessern. Insbesondere besteht die Aufgabe der Erfindung darin, die Sicherheit bei dem Auftreten eines Störlichtbogens zu erhöhen.

Die Aufgabe wird bei einem Funktionsgebäude gemäß dem Oberbegriff des Anspruchs 1 dadurch gelöst, dass ein vertikaler Druckentlastungskanal über eine Druckentlastungsklappe mit dem Äußeren des Funktionsgebäudes verbunden ist, wobei die Druckentlastungsklappe bei Überschreiten eines bestimmten Drucks im Winkel von weniger als 90°zur Vertikalen öffnet..

Die Druckentlastungsklappe ist bevorzugt seitlich am oberen Ende des vertikalen Druckentlastungskanals angeordnet. Im Normalbetrieb ist die Druckentlastungsklappe geschlossen. Bei dem Auftreten eines Störlichtbogens kann sich die Druckentlastungsklappe öffnen und Druck und Gase nach außen leiten. Die Druckentlastungsklappe ist außen an dem Funktionsgebäude befestigt und mit dem vertikalen Druckentlastungskanal verbunden. Die Klappe öffnet bei einem definierten Druck. Die Klappe kann beispielsweise mit Magneten oder Federn geschlossen gehalten. Die Druckentlastungsklappe kann mit einer Kunststoffschraube geschlossen gehalten werden. Die Konstruktion der Klappe verhindert, dass im geschlossenen Zustand Wasser von außen eindringen kann. Bei einem Druckanstieg über dem definierten Öffnungsdruck öffnet sich die Druckentlastungsklappe. Die Druckentlastungsklappe öffnet sich bevorzugt um eine Drehachse an ihrer unteren Kante. Der Öffnungswinkel beträgt weniger als 90°. Vorteilhaft werden die ausströmenden heißen Gase nach oben geführt ausgeleitet. Durch den Einsatz der seitlichen Druckentlastungsklappe wird die Sicherheit von Passanten erhöht, da die heißen Gase kontrolliert und gezielt in einem Winkel von weniger als 90° nach oben ausgeleitet werden können. Zudem besteht konstruktiv nicht die Gefahr, dass die Druckentlastungsklappe bedingt durch die explosionsartige Öffnung aus dem Funktionsgebäude ausreißt und damit Passanten gefährdet, die sich in unmittelbarer Nähe des Funktionsgebäudes befinden. Das Vorsehen der Druckentlastungsklappe seitlich an dem Funktionsgebäude ist insofern auch vorteilhaft, als hierdurch Dichtigkeitsprobleme, wie sie bei einer in der Dachfläche angeordneten Druckentlastungsklappe auftreten können, vermieden werden.

Eine bevorzugte Ausgestaltung der Erfindung besteht darin, dass die Druckentlastungsklappe bei Überschreiten eines bestimmten Drucks im Winkel von weniger als 60° zur Vertikalen öffnet.

Dies erlaubt das Ausleiten der heißen Gase kontrolliert und gezielt im 60° Winkel nach oben.

Eine weitere Ausgestaltung der Erfindung besteht darin, dass Mittel zum Zurückhalten der Druckentlastungsklappe vorgesehen sind.

Die Mittel zum Zurückhalten der Druckentlastungsklappe können seitlich an der Druckentlastungsklappe angeordnete Führungsbleche sein. Vorteilhaft verhindern die Führungsbleche, dass seitlich heiße Gase austreten und ermöglichen eine strikte Führung des Gases, um Verletzungen an Passanten zu vermeiden. Die Führungsbleche können gebogene Langlöcher zur zusätzlichen Verbindung der Druckentlastungsklappen mit dem vertikalen Druckentlastungskanal aufweisen. Die Verbindung kann durch Verschraubung erfolgen. Vorteilhaft kann die Druckentlastungsklappe mit den Führungsblechen gegen Ausreißen beim explosionsartigen Öffnen geschützt werden. Zudem können die Langlöcher den Anschlag für den Öffnungswinkel der Druckentlastungsklappe bilden.

Eine bevorzugte Ausgestaltung der Erfindung besteht darin, dass die Umhausung Holz aufweist. Bevorzugt besteht die Umhausung gänzlich aus Holz.

Die Umhausung kann auf das Fundament aufgesetzt sein. Die Umhausung kann aus Vollholz bzw. einer Holzkonstruktion hergestellt sein. Die Umhausung kann kraftschlüssig mit dem Fundament über Gewindestäbe verbunden werden. Im Holz können dazu Taschen eingefräst werden in die die Gewindestangen über Unterlegscheiben und entsprechende Muttern verschraubt werden. Zwischen der Umhausung und dem Fundament kann ein Dichtband eingelegt werden, um das Eindringen von Insekten zu verhindern.

Die Wände der Umhausung können miteinander verschraubt sein. Notwendige Öffnungen können direkt ausgefräst oder konstruktiv gefertigt werden. Das Dach kann aus Vollholz hergestellt sein und kann über Holzverbinder und Gewindestangen mit den Wänden verbunden werden. Das Dach kann auch aus einem Stück Brettsperrholz bestehen. Es kann in einem Stück auf die Wände der Umhausung aufgelegt werden. Das notwendige Gefälle zum Regenablauf kann direkt in das Holz eingefräst werden. Vorteilhaft sind keine weiteren Aufbauten notwendig, um ein Gefälle herzustellen. Auf das gefräste Dachelement kann vollflächig eine Folie aufgeklebt werden. An den Seiten des Dachs können Aluprofile montiert werden, die eine Tropfkante bilden. Die Folie kann wiederum mit den Aluprofilen verklebt werden. Vorteilhaft kann das Dach dauerhaft mit der Folie abgedichtet werden.

Die Verwendung von Holz als Baumaterial für den Zwischenboden bzw. die Umhausung hat dabei die folgenden Vorteile. Holz ist ein elastischer Baustoff. Im Falle eines Druckanstiegs ist Holz deutlich elastischer als Beton und kann schadlos einen Druckanstieg überstehen. Beton hingegen ist sehr hart bzw. spröde und hat die Eigenschaft, am schwächsten Punkt zu reißen. Holz ist hygroskopisch und nimmt Feuchtigkeit auf und gibt diese wieder ab. Das sorgt für gleichmäßigere klimatische Bedingungen in dem Funktionsgebäude, die mit Technik bestückt sind. Vorteilhaft ist Holz ein schlechter Wärmeleiter. In Verbindung mit seiner hygroskopischen Eigenschaft wird Tauwasser verhindert, da der Taupunkt unterschritten wird. Dies wiederum trägt zur Betriebssicherheit der Stromschaltanlagen bei.

Vorteilhaft kann der CO₂-Fußabdruck des Funktionsgebäudes bei der Verwendung von Holz als Baumaterial im Vergleich zu Funktionsgebäuden aus Beton erheblich reduziert werden. Eine CO₂-Erspanis ergibt sich bedingt durch das geringere Gewicht bei dem Transport der Materialien zum Aufstellungsort.

Eine bevorzugte Weiterbildung der Erfindung besteht darin, dass das Funktionsgebäude einen Zwischenboden aufweist, wobei die Stromschaltanlage auf dem Zwischenboden angeordnet ist, wobei der Zwischenboden Holz aufweist, wobei der Zwischenboden zusammen mit dem Fundament einen Hohlraum bildet, wobei der Hohlraum mit einem vertikalen Druckentlastungskanal in Fluidverbindung steht

Damit der in den Zwischenboden eingeleitete Druck kontrolliert nach außen entweichen kann, ist ein vertikaler Druckkanal an den Zwischenboden angeschlossen. Der vertikale Druckkanal ist beispielsweise aus Holz oder aus Metall gefertigt. Der obere Teil des vertikalen Druckentlastungskanals, der durch den von der Umhausung eingefassten Raum oberhalb des Zwischenbodens geführt wird, kann rundum gegenüber dem Raum geschlossen sein und an den Wänden der Umhausung verschraubt sein. Der vertikale Druckentlastungskanal ist bevorzugt zum Ende hin geschlossen damit der Druck nicht unkontrolliert im Raum entweichen kann. Der vertikale Druckentlastungskanal kann einen seitlichen Auslass nach außen im oberen Bereich aufweisen. Durch den seitlichen Auslass werden vorteilhaft Schwachstellen am Dach, die durch eine Ausleitung des heißen Gases über das Dach gegeben wären, vermieden.

In eine der Aufstellwände der Umhausung kann ein Ausschnitt für den vertikalen Druckkanal vorgesehen sein. Dieser Ausschnitt kann durch entsprechende Montageschienen an dem Druckkanal abgedichtet werden.

Das Fundament dient zur Durchführung von Kabel über entsprechende Kabeleinführungen an der Außenwand des Fundaments, die wasserdicht abgeschlossen sind. Das Fundament kann einen Keller mit Kellerwänden aufweisen. Das Fundament ist beispielsweise aus wasserundurchlässigen Stahlbeton hergestellt. Der Keller kann in Form einer Wanne ausgeprägt sein. Zur Befestigung von Tragelementen können in dem Fundament Ankerschienen eingegossen sein, die eine hohe Flexibilität bei der Befestigung von Tragelementen bieten. Auf dem Rand des Fundaments können Gewindehülsen befestigt, beispielsweise eingegossen sein, um über Gewindestangen, die in die Hülsen eingeschraubt werden, eine kraftschlüssige Verbindung mit der aufstehenden Umhausung herzustellen.

Der Zwischenboden besteht aus Holz. Der Zwischenboden ist von dem Fundament derart beabstandet, um einen Hohlraum zu bilden. Der Zwischenboden dient als Basis für die Stromschaltanlagen beispielsweise Mittelspannungsanlagen. Es hat sich bei Versuchen überraschenderweise herausgestellt, dass der Zwischenboden entgegen der gängigen Praxis nicht aus Stahlbeton bestehen muss, um den bei dem Lichtbogentest entstehenden Druck standzuhalten. Vorteilhaft fungiert die Kombination aus dem Fundament und dem Zwischenboden als Druckeinheit, wobei der Druck über den vertikalen Druckentlastungskanal nach außen geleitet werden kann. Dieses System kann bei allen Mittelspannungsanlagen genutzt werden, die sich nach unten entlasten, wobei die erforderliche Druckentlastung und Personensicherheit gewährleistet wird. Insbesondere kann das System bei nach untern geöffneten Mittelspannungsanlagen verwendet werden. Die Mittelspannungsanlage kann dabei kraftschlüssig beispielsweise mit Schrauben mit dem Zwischenboden verbunden werden. Der Zwischenboden kann Öffnungen für die Entlastung der Mittelspannungsanlagen aufweisen. Vorteilhaft wird im Falle eines Störlichtbogens der Druck nach unten aus der Mittelspannungsanlage abgeleitet. Das Entlasten des Drucks in dem Bedienerraum wird verhindert, wodurch der Personenschutz der Bediener in dem Funktionsgebäude erhöht wird. Die Umhausung auf dem Fundament ist nicht mehr druckrelevant und damit besteht die Möglichkeit, leichtere Aufbauten zu nutzen.

Die Stromschaltanlagen werden durch die Umhausung vor äußeren Einflüssen und unberechtigtem Zugriff geschützt. Der Druck wird durch den vertikalen Druckentlastungskanal nach außen geleitet. Diese Konstruktion ermöglicht es, dass die auf das Fundament platzierte Umhausung weniger stark auf Druckbeständigkeit ausgelegt sein muss. Vorteilhaft kann die Umhausung aus leichteren Materialien hergestellt werden. Eine Ausführung aus druckbeständigem Stahlbeton ist nicht notwendig. Vorteilhaft erfolgt die Druckentlastung kontrolliert durch den Hohlraum und den vertikalen Druckentlastungskanal.

Die Tür des Funktionsgebäudes kann aus Metall beispielsweise Aluminium oder Stahl ausgeführt sein und jeweils zwei Lüftungsgitter aufweisen. Die Lüftungsgitter ermöglichen eine passive Belüftung des Innenraums des Funktionsgebäudes. Die Tür kann dreifach verriegelt sein, um das Aufspringen der Tür im Falle eines Druckaufbaus im Innenraum zu verhindern.

Eine Ausgestaltung der Erfindung besteht darin, dass in dem Funktionsgebäude ein Transformator angeordnet ist.

Insbesondere bei der Ausgestaltung des Dachs aus einem Stück, kann dieses abgehoben werden, um einen besonders einfachen Austausch der Transformatoren beispielsweise bei einem Defekt zu ermöglichen. Vorteilhaft kann der Transformator mit einem Kran aufgestellt oder aufgenommen werden.

Es ist auch möglich, dass das Funktionsgebäude keinen Transformator bzw. einen Transformator in einem abgetrennten Bereich aufweist. Das Funktionsgebäude kann auch Wechsel- und/oder Gleichrichter beinhalten. Das Funktionsgebäude kann einen Energiespeicher zum Ausgleich von Netzschwankungen aufweisen.

Eine Ausführungsform der Erfindung besteht darin, dass der Zwischenboden einen Mittelgang und mindestens ein Bodenelement aufweist, wobei der Mittelgang herausnehmbar ist, wobei die Schaltanlagen und/oder Transformatoren auf den Bodenelementen aufstellbar sind.

Der Zwischenboden kann beispielsweise aus zwei Massivholzplatten auf Maß gefertigt werden. Vorteilhaft wird damit eine hohe Dichtigkeit des Bodens gewährleistet und ein hohes Maß an Stabilität im Zwischenboden, sowohl von der Druckbelastung wie auch von der Belastung durch die Aufstellung von Stromschaltanlagen sichergestellt werden.

Der Zwischenboden mit dem Fundament bilden einen Druckraum, in den sich auf dem Zwischenboden aufgestellte Stromschaltanlagen entlasten. Der Zwischenboden wird aus Holz hergestellt. Hierbei wird der Zwischenboden in mehrere Elemente geteilt. Diese Elemente können ein oder mehrere Bodenelemente zum Aufstellen von Stromschaltanlagen und ein oder mehrere Elemente eines Mittelgangs umfassen. Der Mittelgang kann aus Holzverbundplatten bestehen und mittels Schraubverbindungen untereinander und seitlich an den Bodenelementen zur Aufstellung von Stromschaltanlagen lösbar verbunden werden. Beispielsweise kann der Mittelgang mit den Bodenelementen verschraubt werden.

Der Mittelgang kann aus mehreren hochstabilen Holzverbundplatten bestehen und ist vollständig herausnehmbar, um ein barrierearmes und servicefreundliches Arbeiten im Keller zu ermöglichen. Die Platten des Mittelgangs können links und rechts mit den Bodenelementen mittels Gewindeschraube und Einschlagmuttern verschraubt werden. Die Platten des Mittelgangs können auch miteinander an den Stoßkanten verschraubt werden.

Die Bodenelemente werden bevorzugt in einem Stück aus Holz hergestellt. In die Bodenelemente werden die Aussparungen für die Kabeleinführungen, die Bohrungen für die Befestigung der Stromschaltanlagen sowie die Aussparungen für die Druckentlastungen der Stromschaltanlagen passgenau eingefräst. Weist das Fundament einen Keller mit Kellerwänden auf, können die Bodenelemente mit dem Rand des Kellers abschließen. Die Bodenelemente können an diesem Rand auf Winkeleisen aufgestellt werden und von unten durch die Winkeleisen mit Schrauben verschraubt werden, um ein Abheben im Druckfall zu verhindern. Die Winkeleisen können wiederum über in die Kellerwände des Fundaments eingelassene Ankerschienen verschraubt und mit dem Fundament verbunden werden. Zum Mittelgang hin können die Bodenelemente in der Höhe der Platten des Mittelgangs ausgefräst sein. Damit wird ein ebener Übergang gewährleistet. Die Ausfräsung dient zudem als Dichtebene bei einem plötzlichen Druckanstieg und schafft eine schlüssige Verbindung.

Die Winkeleisen können durchgängig ausgestaltet sein und können an den Innenwänden des Fundaments über die Ankerschienen verschraubt werden. Zusätzlich können die Ankerschienen mit der Wand des Fundaments verklebt werden, um ein Hinterströmen der Winkeleisen zu vermeiden. Die Winkeleisen haben bevorzugt vorgebohrte Löcher im Schenkel für die entsprechende Verschraubung der aufliegenden Bodenelemente. Vorteilhaft wird ein Entweichen des Drucks zwischen Winkeleisen und Aufstellelemente konstruktiv verhindert.

Durch das Einbringen von Holzstützen, die am Fundament mit Ankerschienen und an der Decke des Zwischenbodens mit Holzverbindern verschraubt werden, kann ein Abheben des Zwischenbodens zusätzlich verhindert werden.

Eine weitere Ausgestaltung der Erfindung besteht darin, dass im Bereich des Zwischenbodens ein Sensor angeordnet ist.

Insbesondere kann der Sensoren in dem Hohlraum zwischen dem Fundament und dem Zwischenboden angeordnet sein. Beispielsweise kann über den Sensor die Luftfeuchtigkeit, die Temperatur und/oder der Druck überwacht oder eintretendes Wasser oder austretendes Transformatorenöl erfasst werden. Es sind auch Sensoren zur Erfassung eines unberechtigten Betretens des Funktionsgebäudes denkbar. Im Fall von gasisolierten Schaltanlagen kann der Sensor zur Erfassung von austretendem Gas beispielsweise Schwefelhexafluorid ausgelegt sein. Die Daten der Sensoren können an eine Überwachungsstelle übertragen werden. Vorteilhaft kann mit Hilfe der Sensoren ein möglicher Störfall frühzeitig erkannt werden.

Eine weitere Ausgestaltung der Erfindung besteht darin, dass zwischen dem Hohlraum und dem vertikalen Druckentlastungskanal ein perforiertes Metallblech angeordnet ist.

Dabei ist der vertikale Druckentlastungskanal mit dem Zwischenboden dicht verbunden. Der Teil des vertikalen Druckentlastungskanals unter dem Zwischenboden kann aus einem perforierten Metallblech, beispielsweise einem Lochblech oder einem Streckmetall bestehen. Vorteilhaft wird durch das perforierte Metallblech die Temperatur des unter Druck austretenden Gases bei einem Störlichtbogen reduziert. Teile, die bei der Entstehung des Störlichtbogens aus den Stromschaltanlagen herausgeschleudert werden, werden durch das perforierte Metallblech aufgefangen und zurückgehalten.

Der freie Querschnitt des perforierten Metallblechss ist bevorzugt mindestens doppelt so hoch wie der freie Querschnitt des vertikalen Druckentlastungskanals damit die heißen Gase ungehindert in den vertikalen Druckentlastungskanal entweichen können und der Druck im Zwischenboden gesenkt wird.

Eine weitere Ausgestaltung der Erfindung besteht darin, dass der vertikale Druckentlastungskanal über eine Druckentlastungsklappe mit dem Äußeren des Funktionsgebäudes verbunden ist.

Weiterhin ist es zur Erfindung gehörig, dass der vertikale Druckentlastungskanal ein Leitblech aufweist.

Durch das Leitblech kann der Druck im vertikalen Druckentlastungskanal auf die Druckentlastungsklappe umgeleitet werden. Insbesondere kann der Druck seitlich von dem Dach weggelenkt werden, um eine Beschädigung des Dachs durch Staudruck zu verhindern. Das Leitblech kann halbrund ausgestaltet sein und im oberen Bereich des vertikalen Druckentlastungskanals mit diesem verbunden sein.

Schließlich ist es auch vorteilhaft, dass das Funktionsgebäude mindestens eine Ladesäule für ein Elektrofahrzeug aufweist.

Dies kann sowohl eine Ladesäule für einen Pkw sein als auch eine Ladesäule für einen Lkw. Die Kombination einer Ladesäule mit einem Funktionsgebäude, in das ein Transformator integriert ist, ist in technischer Hinsicht vorteilhaft. Vorzugsweise kann die mindestens eine Ladesäule an der Außenseite des Funktionsgebäudes angeordnet sein.

Das Funktionsgebäude verfügt vorzugsweise über einen Betonkeller. Die Ladesäule wird vorzugsweise auf den Betonkeller des Funktionsgebäudes montiert und die Verkabelung der Ladesäule kann bereits bei Anlieferung des Funktionsgebäudes komplett vorinstalliert sein, was die Installation von Ladesäulen wesentlich beschleunigt.

Im Folgenden wird ein Ausführungsbeispiel anhand von Zeichnungen näher erläutert.

Es zeigen
- Fig. 1: einen Querschnitt durch ein erfindungsgemäßes Funktionsgebäude,
- Fig. 2: den Schnitt X-X durch das erfindungsgemäße Funktionsgebäude aus Fig. 1,
- Fig. 3: den Schnitt Y-Y durch das erfindungsgemäße Funktionsgebäude aus Fig. 1
- Fig. 4: die Druckentwicklung in dem Funktionsgebäude im Falle eines Störlichtbogens,
- Fig. 5: ein erfindungsgemäßes Funktionsgebäude mit Ladesäulen,
- Fig. 6a und Fig. 6b: den Druckentlastungskanal mit der Druckentlastungsklappe in perspektivischer Ansicht und in geschnittener Darstellung.

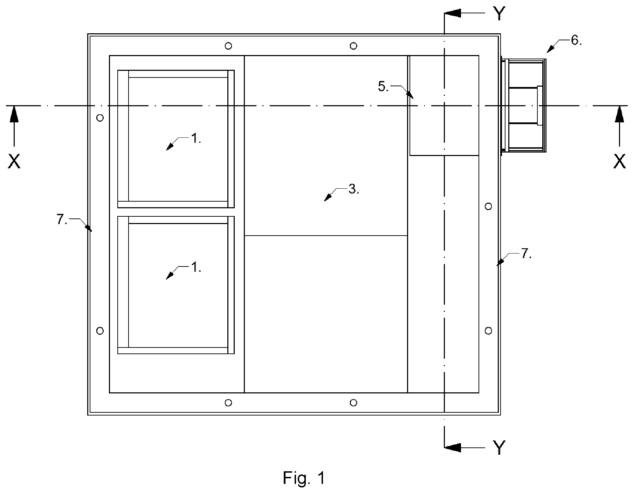

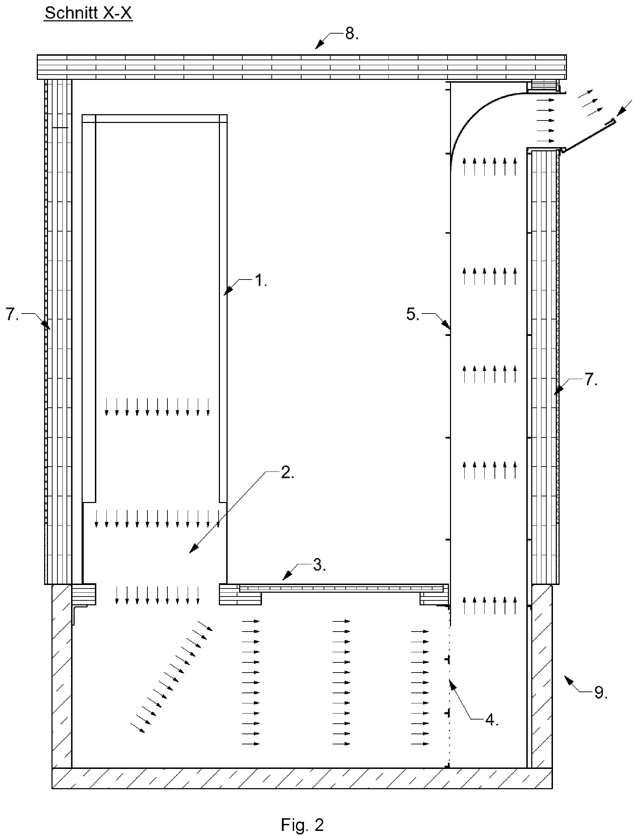

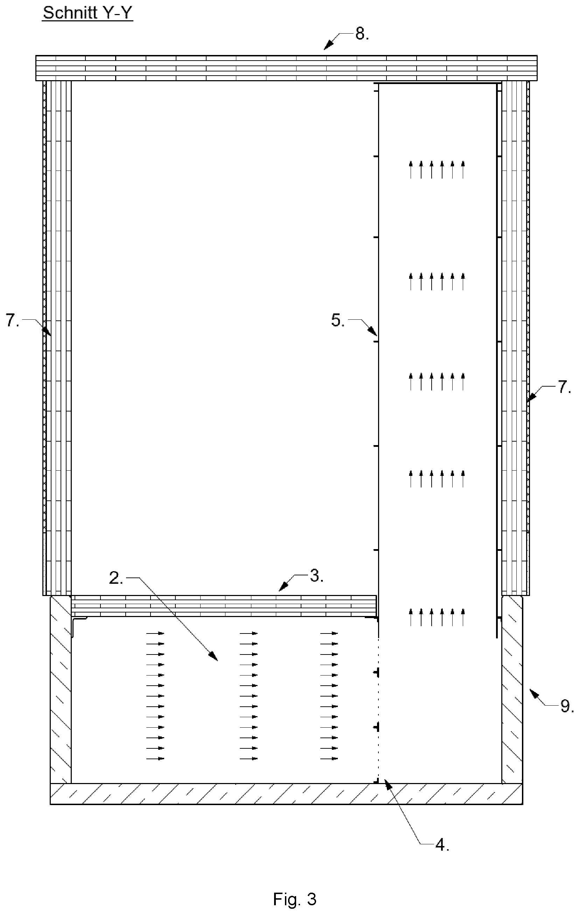

Die Figuren 1 bis 3 zeigen ein Funktionsgebäude für Stromschaltanlagen. Insbesondere zeigen die Figuren eine Trafostation für eine Mittelspannungsanlage.

Das Funktionsgebäude weist ein Fundament 9 auf. Das Fundament 9 besteht aus einem Betonsockel mit einem Keller. In dem Fundament 9 können abdichtbare Öffnungen für Zuleitungen vorgesehen sein. Das Fundament 9 kann aus einem wasserdichten Stahlbeton bestehen.

Über dem Fundament 9 ist ein Zwischenboden 3 angeordnet. Der Zwischenboden 3 kann über Winkel mit dem Fundament 9 verschraubt sein. Der Zwischenboden 3 kann einteilig oder mehrteilig aufgebaut sein. Der Zwischenboden 3 ist aus Holz hergestellt. Der Zwischenboden 3 kann einen entnehmbaren Mittelgang und ein Bodenelement zur Aufnahme von Stromschaltanlagen 1 aufweisen. Die Stromschaltanlagen 1 können Mittelspannungsanlagen sein.

Die Stromschaltanlagen 1 sind durch eine Umhausung mit Wänden 7 und einer Decke 8 vor äußeren Einflüssen geschützt. Die Umhausung besteht aus Vollholz oder einer Holzkonstruktion.

Das Fundament 9 und der Zwischenboden 3 bilden einen Hohlraum 2 als Druckeinheit. Im Fall eines Störlichtbogens wird der Druck über den Hohlraum 2 abgeleitet. Die Strömungsrichtung der Gase wird dabei mit Pfeilen angedeutet. Der Hohlraum 2 ist über ein perforiertes Metallblech 4 mit einem vertikalen Druckentlastungskanal 5 verbunden. Der vertikale Druckentlastungskanal 5 ist mit einer Wand 7 der Umhausung verbunden.

Am oberen Ende des vertikalen Druckentlastungskanals 5 ist ein halbrundes Leitblech angeordnet. Das halbrunde Leitblech leitet den Druck durch eine Druckentlastungsklappe 6 nach außen. Die Druckentlastungsklappe 6 ist seitlich an dem vertikalen Druckentlastungskanal 5 angeordnet. Die Druckentlastungsklappe 6 öffnet sich bei einem Druckanstieg in einem Winkel von 60° zur Vertikalen. Im Normalbetrieb kann die

Druckentlastungsklappe 6 durch Magnete oder Federn geschlossen gehalten werden.

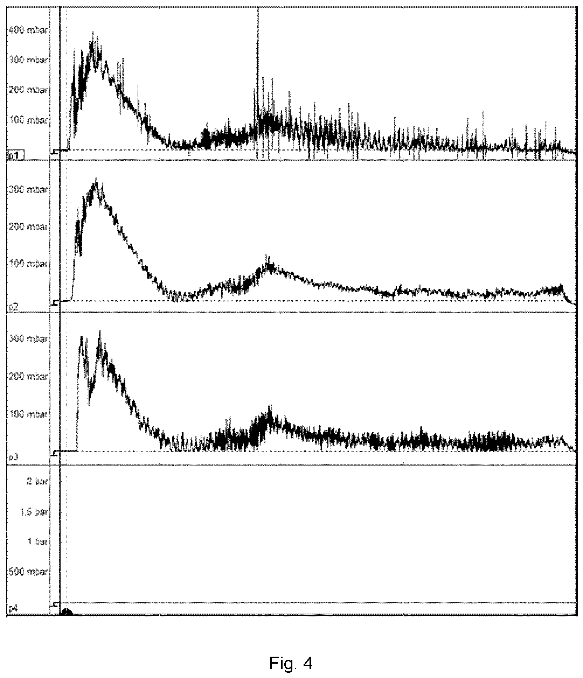

Fig. 4 zeigt die Druckentwicklung in dem erfindungsgemäßen Funktionsgebäude im Falle eines Störlichtbogens, wobei von oben nach unten
- der Druckverlauf in dem Messfeld,
- der Druckverlauf im Boden des Funktionsgebäudes,
- der Druckverlauf im Druckkanal des Funktionsgebäudes und
- der Druckverlauf im Bedienerraum des Funktionsgebäudes
jeweils über eine Sekunde dargestellt ist.

Es ist zu erkennen, dass nach Öffnen der Druckentlastungsklappe (Pfeil) der Druck schnell abgebaut wird und vor allem, dass im Bedienerraum der Druck überhaupt nicht ansteigt.

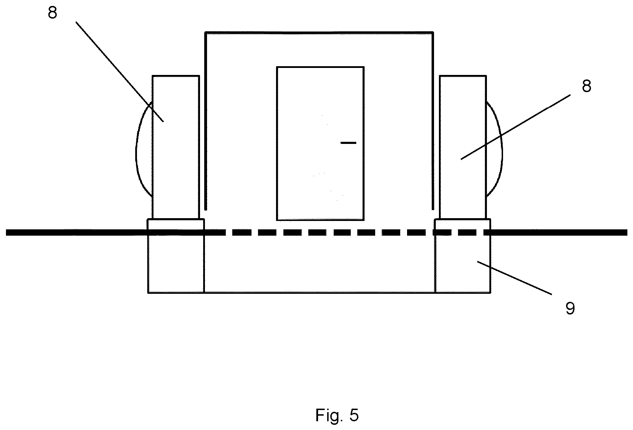

Fig. 5 zeigt die Integration von Ladesäulen 8 in das Funktionsgebäude. Hier werden zwei Ladesäulen seitlich neben dem Funktionsgebäude angeordnet, die auf den Betonkeller 9 des Funktionsgebäudes montiert sind. Die Verkabelung der Ladesäulen 8 kann bereits bei Anlieferung des Funktionsgebäudes komplett vorinstalliert sein, was die Installation der Ladesäulen deutlich beschleunigt.

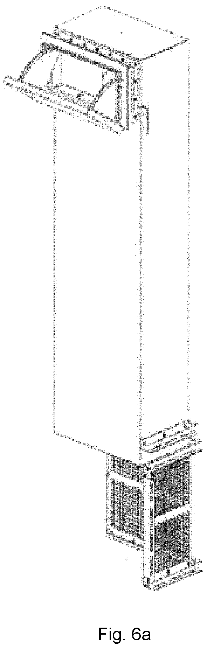

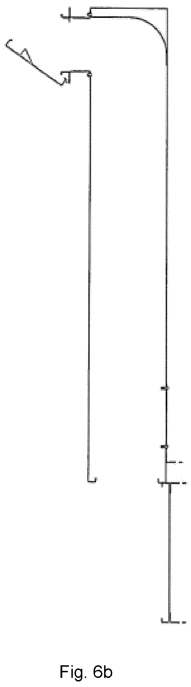

Die Fig. 6 und 6a zeigen den Druckentlastungskanal 5 und die Druckentlastungsklappe 6. Es ist deutlich zu erkennen, daß am unteren Ende des Druckentlastungskanals 5 ein perforiertes Metallblech 4 angeordnet ist, das den Eintritt von Teilen einer das Gittermaß übersteigenden Größe in den Druckentlastungskanal 5 verhindert. Der Druckentlastungskanal 5 führt senkrecht nach oben. Am oberen Ende des Druckentlastungskanals 5 ist seitlich an diesem die Druckentlastungsklappe 5 angeordnet, die bei einem bestimmten Druck an der Seite des Funktionsgebäudes nach oben in einem Winkel von ca. 60° öffnet und den Druck an die Umgebung ableitet.

## Patentansprüche

1. Funktionsgebäude für Stromschaltanlagen 1, wobei das Funktionsgebäude ein Fundament 9 und eine Umhausung mit Wänden 7 und einer Decke 8 aufweist, innerhalb welcher die Leitungsanschlüsse und die Stromschaltanlagen 1 angeordnet sind, **dadurch gekennzeichnet, dass** ein vertikaler Druckentlastungskanal 5 über eine Druckentlastungsklappe 6 mit dem Äußeren des Funktionsgebäudes verbunden ist, wobei die Druckentlastungsklappe 6 bei Überschreiten eines bestimmten Drucks im Winkel von weniger als 90° zur Vertikalen öffnet.

2. Funktionsgebäude gemäß Anspruch1, **dadurch gekennzeichnet, dass** die Druckentlastungsklappe 6 bei Überschreiten eines bestimmten Drucks im Winkel von weniger als 60° zur Vertikalen öffnet.

3. Funktionsgebäude gemäß Anspruch 1 oder 2, **dadurch gekennzeichnet, dass** Mittel zum Zurückhalten der Druckentlastungsklappe 6 vorgesehen sind.

4. Funktionsgebäude gemäß einem der Ansprüche 1 bis 3, **dadurch gekennzeichnet, dass** die Umhausung Holz aufweist.

5. Funktionsgebäude gemäß einem der vorangegangenen Ansprüche , **dadurch gekennzeichnet, dass** das Funktionsgebäude einen Zwischenboden 3 aufweist, wobei die Stromschaltanlage 1 auf dem Zwischenboden 3 angeordnet ist, wobei der Zwischenboden 3 Holz aufweist, wobei der Zwischenboden 3 zusammen mit dem Fundament 9 einen Hohlraum 2 bildet, wobei der Hohlraum 2 mit einem vertikalen Druckentlastungskanal 5 in Fluidverbindung steht.

6. Funktionsgebäude gemäß einem der vorangegangenen Ansprüche, **dadurch gekennzeichnet, dass** in dem Funktionsgebäude ein Transformator angeordnet ist.

7. Funktionsgebäude gemäß einem der vorangegangenen Ansprüche, **dadurch gekennzeichnet, dass** der Zwischenboden 3 einen Mittelgang und mindestens ein Bodenelement aufweist, wobei der Mittelgang herausnehmbar ist, wobei die Stromschaltanlagen 1 und/oder Transformatoren auf den Bodenelementen aufstellbar sind.

8. Funktionsgebäude gemäß einem der vorangegangenen Ansprüche, **dadurch gekennzeichnet, dass** im Bereich des Zwischenbodens 3 ein Sensor angeordnet ist.

9. Funktionsgebäude gemäß einem der vorangegangenen Ansprüche, **dadurch gekennzeichnet, dass** zwischen dem Hohlraum 2 und dem vertikalen Druckentlastungskanal 5 ein perforiertes Metallblech angeordnet ist.

10. Funktionsgebäude gemäß einem der vorangegangenen Ansprüche, **dadurch gekennzeichnet, dass** der vertikale Druckentlastungskanal 5 ein Leitblech aufweist.

11. Funktionsgebäude gemäß einem der vorangegangenen Ansprüche, **dadurch gekennzeichnet, daß** das Funktionsgebäude mindestens eine Ladesäule 8 für ein Elektrofahrzeug aufweist.
